Europäisches Patentamt

European Patent Office

Office européen des brevets

(19)

(11) Numéro de publication: **0 225 260**
**A1**

(12) **DEMANDE DE BREVET EUROPEEN**

(21) Numéro de dépôt: **86402686.9**

(22) Date de dépôt: **03.12.86**

(51) Int. Cl.⁴: **F 02 M 37/00**
F 02 M 31/16

(30) Priorité: **04.12.85 FR 8517960**

(43) Date de publication de la demande:
**10.06.87 Bulletin 87/24**

(84) Etats contractants désignés:
**AT BE CH DE ES GB GR IT LI LU NL SE**

(71) Demandeur: **Debeaux, Michel**
**29 quai Gauthey**
**F-21000 Dijon (FR)**

(72) Inventeur: **Debeaux, Michel**
**29 quai Gauthey**
**F-21000 Dijon (FR)**

(74) Mandataire: **Madeuf, Claude Alexandre Jean et al**
**CABINET MADEUF 3, avenue Bugeaud**
**F-75116 Paris (FR)**

(54) Dispositif de régulation de la température du carburant de moteurs et de brûleurs à gazole.

(57) Dispositif de régulation de la température du carburant de moteurs, notamment de moteurs diesels et de brûleurs dans lequel le carburant est amené à passer dans un premier circuit d'un échangeur de chaleur (9), caractérisé en ce que le second circuit (10) de l'échangeur de chaleur est contrôlé par un distributeur à régulation thermostatique (11) relié par une conduite de retour (14) à la sortie d'une pompe d'injection (2) et par une conduite de recyclage (17) à l'entrée de ladite pompe (2).

Fig.1

EP 0 225 260 A1

## Description

Dispositif de régulation de la température du carburant de moteurs et de brûleurs à gazole.

La présente invention concerne un nouveau dispositif pour la régulation de la température du gazole ou carburant analogue amené à la pompe d'injection d'un moteur diesel, d'un brûleur ou d'un turbo-moteur.

Il est bien connu que la température du gazole injecté dans un moteur diesel ou un brûleur doit être comprise dans une fourchette faisant que la pulvérisation s'effectue de la façon la plus appropriée à la sortie des injecteurs

Il est important que la température du gazole injectée ne soit pas trop élevée car il se produit alors un écoulement sur la paroi des cylindres qui engendre un lavage des cylindres, donc une mauvaise lubrification et, par conséquent, une usure prématurée du moteur.

Il est connu qu'une partie non négligeable du gazole amené à la pompe d'injection n'est pas directement envoyée dans les cylindres et fait retour à l'entrée de la pompe l'injection, le plus souvent par l'intermédiaire d'un dégazeur ou en amont de celui-ci.

Etant donné que la pompe d'injection est chaude, ce qui est dû à son travail et à son voisinage du bloc moteur, le gazole qui est recyclé à partir de la sortie de la pompe est chaud et presque toujours à une température trop élevée par rapport au seuil qui convient à une injection satisfaisante. Si le gazole amené par ailleurs est lui-même chaud ou lorsque le moteur ne tourne pas sous une charge élevée, la quantité recyclée est importante et la température du gazole à l'entrée de la pompe d'injection est presque toujours trop élevée, particulièrement sous des climats chauds.

La présente invention crée un nouveau dispositif de régulation qui rend possible, sans consommation d'énergie, de régler en permanence la température à l'entrée de la pompe d'injection pour que le gazole injecté le soit à la température la plus appropriée pour un bon rendement du moteur.

L'invention rend possible aussi de tenir compte d'un fonctionnement du moteur par temps très froid pouvant provoquer le figeage des particules de paraffine que peut contenir le gazole.

Conformément à l'invention, le dispositif de régulation de la températuire du carburant de moteurs notamment diesels et de brûleurs dans lequel le carburant est amené à passer dans un premier circuit d'un échangeur de chaleur est caractérisé en ce que le second circuit de l'échangeur de chaleur est contrôlé par un distributeur à régulation thermostatique lui-même relié par une conduite de retour à la sortie d'une pompe d'injection et par une conduite de recyclage à l'entrée de ladite pompe.

Diverses autres caractéristiques de l'invention ressortent d'ailleurs de la description détaillée qui suit.

Des formes de réalisation de l'objet de l'invention sont représentées, à titre d'exemples non limitatifs, aux dessins annexés.

La fig. 1 est un schéma du dispositif de régulation de la température du carburant de moteur diesel selon l'invention.

La fig. 2 est un schéma analogue à la fig. 1 d'une variante.

La fig. 3 est un schéma analogue aux figures 1 et 2 d'une autre variante.

La fig. 4 est une coupe partielle, à plus grande échelle, d'un régulateur.

Le dispositif illustré au dessin est destiné à être intercalé entre le réservoir de gazole 1 d'un véhicule ou d'un moteur fixe du type diesel et la pompe d'injection 2 de ce moteur.

D'une manière connue, und conduite 3 est prévue pour puiser le gazole du réservoir 1 et le conduire à la pompe d'injection 2. La conduite 3 amène le gazole à passer dans le filtre 4, un compteur 5 et un dégazeur 6 avant que le gazole entre dans la pompe 2.

Comme cela est représenté, une pompe de puisage 7 annexe peut être prévue.

La conduite 3 est branchée au premier circuit 8 d'un échangeur de chaleur 9 comportant un second circuit 10 relié à un distributeur 11 à régulation thermostatique.

Comme cela est connu, tout le gazole amené à la pompe 2 n'est pas envoyé dans le circuit des injecteurs 13. Le gazole en surplus sortant de la pompe d'injection 2 est dirigé par une conduite de retour 14 vers le distributeur 11 commandé par une cartouche termosensible 15.

Dans l'exemple représenté pour lequel, le distributeur 11 est d'un type à deux positions il relie par le circuit interne 16 la conduite 14 à une conduite 17 ramenant le gazole au dégazeur 6 et, par conséquent, à la pompe d'injection 2.

Etant donné que le dégazeur 6 est disposé en aval du compteur 5, le gazole circulant depuis la sortie de la pompe d'injection 2 par les conduites 14 et 17 ne peut pas être compté deux fois de sorte que la mesure effectuée par le compteur n'est pas influencée.

Le gazole passant par la pompe d'injection 2 est nécessairement chauffé dans cette pompe et, par conséquent, le gazole passant par la conduite 14 se trouve à une température supérieure à celle du gazole contenu dans le réservoir 1.

Il est important pour le bon fonctionnement du moteur que le gazole amené à la pompe d'injection 2 n'atteigne pas une température trop élevée, par exemple que cette température soit toujours réglée aux environs de 40°C.

Si la température du gazole amené au régulateur 11 dépasse un seuil limite, alors ce régulateur ouvre la communication menant au second circuit 10 de l'échangeur de chaleur 9, ce qui a pour effet de refroidir le gazole par mélange et qui est ensuite ramené à la conduite 17 vers le dégazeur 6 et l'entrée de la pompe d'injection 2.

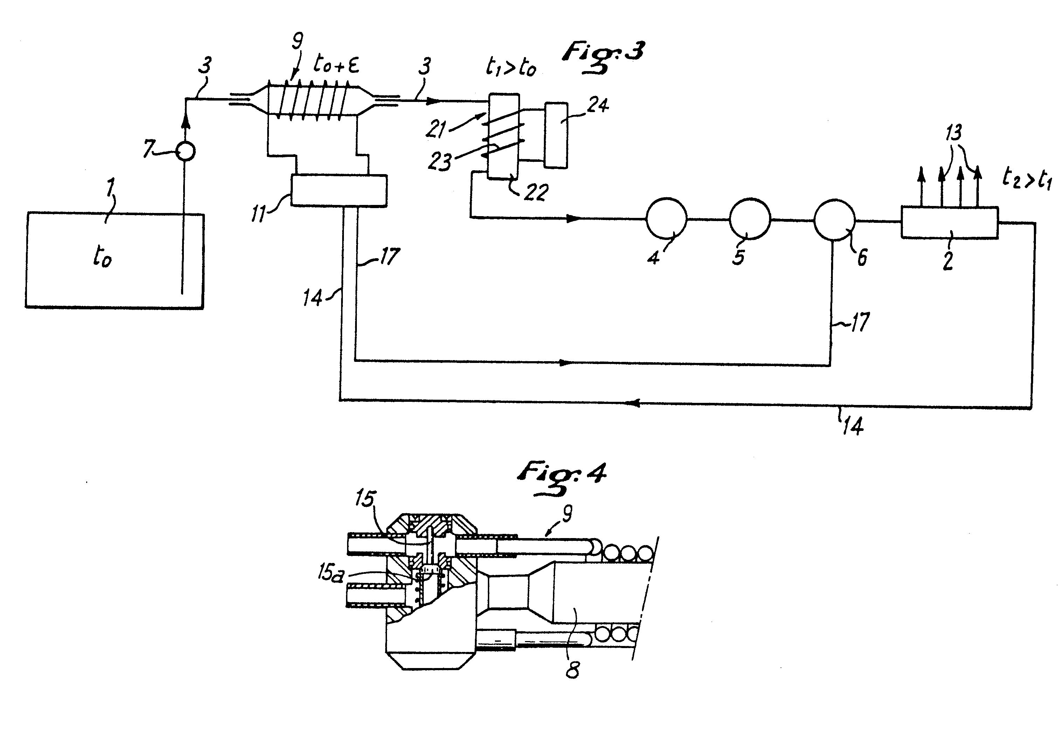

Le régulateur thermostatique 11 peut être d'un type quelconque connu de la technique, par exemple du genre de ceux qui comportent une cartouche thermosensible dilatable 15 (fig. 4) qui commande un clapet 15a ou un jeu de clapets remplissant une fonction analogue aux circuits internes 16 et 18 illustrés au dessin.

Il est avantageux que le régulateur 11 soit prévu pour que le débit menant au second circuit 10 de l'échangeur 9 soit variable, ce qui est réalisé par le régulateur de la fig. 4.

De cette façon, le gazole amené à la pompe d'injection 2 est toujours maintenu à une température sensiblement constante.

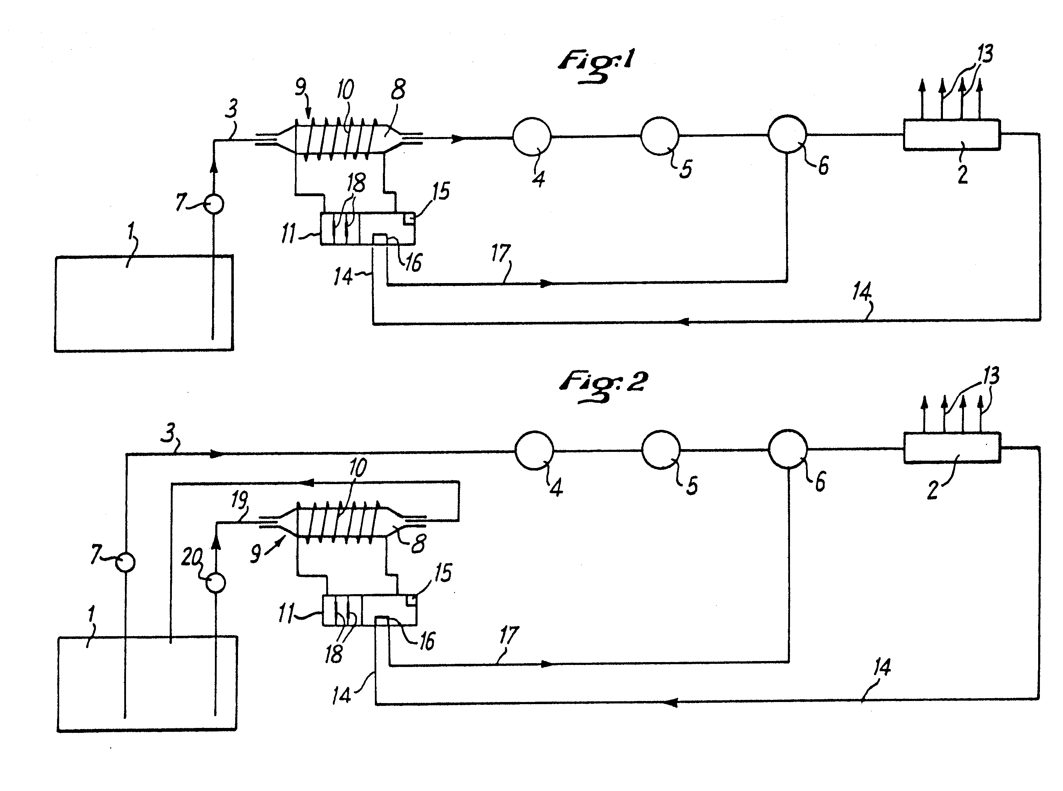

La fig. 2 illustre une variante selon laquelle l'échangeur 9 est monté en série sur une canalisation 19 indépendante du conduit 3 menant par le filtre 4, le compteur 5 et le dégazeur 6, à la pompe d'injection 2.

La canalisation 19 est montée en circuit fermé sur le réservoir 1 et comporte une pompe de circulation 20.

Comme dans le mode de réalisation décrit précédemment, la conduite de retour 14 sortant de la pompe d'injection 2 mène au régulateur 11 et la conduite 17 de recyclage ramène le gazole du régulateur 11 au dégazeur 6 ou, en amont de ce dégazeur, dans la conduite 3.

L'échangeur de chaleur 9 est disposé en série sur la canalisation 19.

Comme cela ressort de la description ci-dessus, tant que le gazole sortant de la pompe d'injection 2 n'atteint pas un seuil de température faisant ouvrir le régulateur 11, le gazole est ramené directement au dégazeur 6.

Au-dessus d'un seuil de température déterminé, le gazole est amené à passer en plus ou moins grande quantité dans le second circuit 10 de l'échangeur de chaleur 9 et il est, par conséquent, refroidi par le gazole pompé depuis le réservoir 1 par la pompe 20.

Dans certains cas et, en particulier, lorsqu'un véhicule à moteur diesel est amené à circuler successivement sous des climats chauds et sous des climats froids, il est avantageux de réaliser le dispositif comme illustré à la fig. 3.

Dans ce cas, la conduite 3 amène tout d'abord le gazole provenant du réservoir 1 à l'échangeur de chaleur 9 comme décrit en référence à la fig. 1, et il l'amène ensuite à un second échangeur 21 dont le premier circuit 22 est parcouru par le gazole et dont le second circuit 23 peut être parcouru par le liquide de refroidissement provenant des chemises du moteur.

La mise en circulation du liquide provenant des chemises du moteur est destinée à réchauffer le gazole et est contrôlée par un second régulateur thermique 24 analogue au régulateur 11.

Par temps froid, le gazole provenant du réservoir 1 traverse le premier échangeur 9, puis le second échangeur 21 dans lequel il est réchauffé jusqu'à une température évitant le figeage de la paraffine qu'il peut contenir. Ce gazole est ensuite conduit par le filtre 4, le compteur 5 et le dégazeur 6 à la pompe d'injection 2. Si le gazole sortant de la pompe d'injection 2 atteint une température trop élevée, il est refroidi comme expliqué ci-dessus en référence à la fig. 1. Dans le cas contraire, il est directement ramené à l'entrée de la pompe d'injection 2 après passage dans le dégazeur 6.

Le dispositif comportant le second échangeur de réchauffage 21 peut être mis en oeuvre de la même manière dans le circuit de la fig. 2 puisque l'échangeur de réchauffage 21 est monté en série sur la conduite 3 en amont du filtre 4.

L'invention n'est pas limitée aux exemples de réalisation représentés et décrits car diverses modifications peuvent y être apportées sans sortir de son cadre.

En particulier, le dispositif de régulation de l'invention peut ne pas comporter de dispositif compteur de quantité de gazole consommé.

## Revendications

1. Dispositif de régulation de la température du carburant de moteurs, notamment de moteurs diesels et de brûleurs dans lequel le carburant est amené à passer dans un premier circuit d'un échangeur de chaleur (9) dont un second circuit est commandé par un thermostat caractérisé en ce que le second circuit (10) de l'échangeur de chaleur est contrôlé par un distributeur progressif à régulation thermostatique (11) relié par une conduite de retour (14) à la sortie d'une pompe d'injection (2) et par une conduite de recyclage (17) à l'entrée de ladite pompe (2) de sorte que la régulation thermique est assurée par une action sur l'échangeur thermique (10) et par une action de mélange du gazole à des températures différentes.

2. Dispositif suivant la revendication 1, caractérisé en ce que le régulateur thermostatique contient une cartouche sensible à la température du gazole provenant de la sortie de la pompe d'injection (2), ladite cartouche contrôlant un circuit faisant que tout le gazole est ramené directement à la pompe d'injection (2) ou qu'une partie au moins du gazole provenant de ladite pompe d'injection (2) est amenée à passer dans le second circuit (10) de l'échangeur de chaleur (9).

3. Dispositif suivant la revendication 2, caractérisé en ce que le premier circuit (8) de l'échangeur de chaleur (9) est monté en série sur la conduite (3) menant du réservoir de gazole (1) à l'entrée de la pompe d'injection (2).

4. Dispositif suivant l'une des revendications 1 à 3, caractérisé en ce que le premier circuit (8) de l'échangeur de chaleur (9) est monté en série sur une canalisation (19) dont l'entrée et la sortie communiquent avec l'intérieur du réservoir de gazole (1), ladite canalisation (19) comportant également une pompe de circulation (20).

5. Dispositif suivant l'une des revendications 1 à 4, caractérisé en ce que la conduite (17) ramenant le gazole du régulateur (11) vers l'entrée de la pompe d'injection (2) débouche dans un dégazeur (6) ou en amont de celui-ci.

6. Dispositif suivant la revendication 5, caractérisé en ce que la conduite (3) menant du réservoir de gazole (1) à l'entrée de la pompe d'injection (2) est munie d'un second échangeur (21) dont le second circuit (23) est branché, par l'intermédiaire d'un régulateur (24), sur le circuit de refroidissement du moteur.

7. Dispositif suivant la revendication 6, caractérisé en ce qu'un filtre (4) est monté en amont de la pompe d'injection (2).

8. Dispositif suivant la revendication 7, caractérisé en ce qu'un compteur du volume de gazole consommé est monte sur la conduite menant du réservoir (1) à la pompe d'injection (2), ledit compteur étant disposé en amont du dégazeur (6) et de sorte que le gazole sortant de la pompe d'injection (2) soit ramené par la conduite (17) vers l'entrée de cette pompe en aval dudit compteur.

Fig.1

Fig.2

0225260

*Fig. 3*

$t_0 + \varepsilon$

$t_1 > t_0$

$t_2 > t_1$

*Fig. 4*

0225260

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | GB-A-2 123 086 (LUCAS INDUSTRIES PUBLIC LTD, CO.)  * Résumé; figures 1,2; page 1, lignes 63-113,123-130; page 2, lignes 1-6,21-72 * | 1-3 | F 02 M 37/00  F 02 M 31/16 |
| A | | 6,7 | |
| | --- | | |
| Y | FR-A-2 564 147 (J.-P. MIELLE)  * Page 4, lignes 17-34; page 5, lignes 3-18; figures 2,3 * | 1-3 | |
| A | | 8 | |
| | --- | | |
| A | GB-A-2 092 669 (INOTEC SARL)  * Résumé; page 1, lignes 105-124; page 2, lignes 10-14,50-62; figure * | 1,3 | DOMAINES TECHNIQUES RECHERCHES (Int. Cl.4) |
| | --- | | |
| A | EP-A-0 059 303 (KIENZLE APPARATE GmbH)  * Résumé; figure 1 * | 1,4 | F 02 M |
| | --- | | |
| A | GB-A-1 573 703 (STUART JOHN PLUMBLY et al.)  * Page 2, lignes 3-35; figure 1 * | 5,8 | |
| | ----- | | |

Le présent rapport de recherche a été établi pour toutes les revendications

| Lieu de la recherche | Date d'achèvement de la recherche | Examinateur |
|---|---|---|
| LA HAYE | 17-02-1987 | JORIS J.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82